# EUROPÄISCHE PATENTSCHRIFT

(11) **EP 4 431 691 B1**
(45) Veröffentlichungstag und Bekanntmachung des Hinweises auf die Patenterteilung: **10.09.2025**
(21) Anmeldenummer: 24162732.2
(22) Anmeldetag: 11.03.2024
(51) Int. Cl.: E06B 1/28, E06B 3/22, E06B 1/60, F16B 13/14

(54) **SYSTEM UND VERFAHREN ZUR BEFESTIGUNG EINES VERANKERUNGSELEMENTS IN EINEM HOHLPROFIL EINES FENSTERS ODER EINER TÜR**
SYSTEM AND METHOD FOR FIXING AN ANCHORING ELEMENT IN A HOLLOW PROFILE OF A WINDOW OR A DOOR
SYSTÈME ET PROCÉDÉ DE FIXATION D'UN ÉLÉMENT D'ANCRAGE DANS UN PROFILÉ CREUX D'UNE FENÊTRE OU D'UNE PORTE

(30) Priorität: 16.03.2023 DE 102023106642
(43) Veröffentlichungstag der Anmeldung: 18.09.2024
(73) Patentinhaber: Veka AG, 48324 Sendenhorst (DE)
(72) Erfinder: WESSELMANN, Justin, 48324 Sendenhorst (DE); VOGEL, Robert, 48324 Sendenhorst-Albersloh (DE)
(74) Vertreter: Cohausz Hannig Borkowski Wißgott

(56) Entgegenhaltungen:
- EP-B1- 2 375 087
- DE-A1- 102014 011 794
- DE-A1- 102020 108 505
- DE-U1- 29 803 927

## Beschreibung

Die Erfindung betrifft ein System zur Befestigung eines Verankerungselements in einem Hohlprofil mit einer Siebhülse für die Befestigung des Verankerungselementes in dem Hohlprofil, wobei das System das Hohlprofil und die Siebhülse umfasst und wobei die Siebhülse eine Längserstreckung entlang einer Mittelachse aufweist und an wenigstens einem der axialen Enden eine Injektionsöffnung aufweist, wobei die Wandung der Siebhülse mehrere, die Wandung vollständig durchdringende Austrittsöffnungen aufweist.

Ein genanntes Verankerungselement kann z.B. eine Gewindestange sein oder ein Innengewindeanker oder ein sonstiges der Verankerung dienendes Element sein, wobei diese Verankerungselemente dazu dienen, dass weitere Befestigungselemente an dem Hohlprofil befestigt werden können.

Die genannte Injektionsöffnung ist dafür vorgesehen, dass ein Injektionskleber in das Innere der Siebhülse injiziert werden kann. Das gegenüberliegende axiale Ende ist üblicherweise geschlossen, was bei der Erfindung vorzugsweise auch der Fall sein kann. Das gegenüberliegende Ende kann auch offen sein.

Die genannten Austrittsöffnungen sind dafür vorgesehen, dass ein injizierter Kleber aus den Austrittsöffnungen nach außen heraustreten kann in das um die Siebhülse herum liegende Bauteil.

Im bekannten Stand der Technik sind Hohlprofile üblicherweise durch Hohlziegel des Mauerwerks gebildet. Das Dokument EP 2 375 087 B1 zeigt z.B. die Verwendung einer Siebhüle mit einem sogenannten Hohlblockstein. DE102014011794A1 offenbart ein System mit den Merkmalen des Oberbegriffs des Anspruchs 1.

Die Erfindung betrifft auch ein Verfahren zur Anbringung eines Verankerungselementes in ein Hohlprofil mittels eines solchen Systems.

Bei Fenstern oder Türen, insbesondere bei Terrassentüren, welche als Tür eine fensterähnliche Öffnung außerhalb der Bodenebene bereitstellen, z.B. einem sogenannten französischen Balkon, sind in der Regel Absturzsicherungen in Form von Platten, Gittern oder Glasscheiben vorzusehen. Diese werden meist von außen im Mauerwerk verankert.

Aus DE 10 2020 108 505 A1 ist z.B. ein Haltesystem zum Halten eines Objekts vorgeschlagen, dessen Art der Befestigung von außen nicht erkennbar ist und ein besonders belastbares Halten, insbesondere ein Sichern gegen Herunterfallen eines Objekts ermöglicht.

Eine Befestigungsschraube zur Montage einer Tür- oder Fensterkonstruktion wird in einer Siebhülse geführt, die durch eine Durchbrechung der Mantelfläche eingebrachten Kleber, durch die Austrittsöffnungen seitlich aus der Siebhülse herauspresst. Die Austrittsöffnungen erlauben es, die Haltemittel mittels einer Klebeverbindung in das Mauerwerk einzubringen.

Dieses System erlaubt die Befestigung weiterer Elemente allerdings nicht am Blendrahmenprofil, sondern benötigt das Mauerwerk als darunterliegende Konstruktion, um die Siebhülse zu verankern. Insofern besteht auch keine Möglichkeit Anbauten an einem Hohlprofil vor der Montage des Hohlprofils am Mauerwerk an diesem zu befestigen.

Die Aufgabe der Erfindung besteht somit darin ein Befestigungssystem und ein Verfahren zur Befestigung bereitzustellen, welches es erlaubt direkt am Hohlprofil eines Fensters oder einer Tür, insbesondere welches Teil der Rahmenkonstruktion eines Fensters oder einer Tür ist, vorzugsweise an einem Kunststoffhohlprofil daran angrenzende Anbauteile, wie z.B. Eck- und Scherenlager, Schließblechverschraubung, Absturzsicherung, Raffstores etc. auf einfache Weise zu befestigen, insbesondere ohne dass ein darunter liegendes Mauerwerk benötigt wird.

Die Verbindung eines mit den Hohlprofilen eines solchen Systems gebildeten Rahmens mit dem Mauerwerk erfolgt vorzugsweise mit herkömmlichen Befestigungselementen, wie zum Beispiel Winkeln oder Mauerankern / Fensterrahmenschrauben.

Vorzugsweise gewünscht ist es, dass zumindest einige der Hohlkammern innerhalb eines Hohlprofils gezielt mit einer Injektionsmasse, beispielsweise einem härtbaren Injektionskleber vollständig über die Länge eines Hohlprofils aufgefüllt werden und für Stabilität und Dichtigkeit des Gesamtsystems sorgen, insbesondere unter Verzicht von wärmeleitenden Stahlverstärkungen. Außerdem kann vorzugsweise der eingebrachte Injektionskleber die Hohlkammern gezielt vor Wassereintritt abdichten.

Diese Aufgabe wird durch ein Befestigungssystem der eingangs genannten Art gelöst, bei dem das Hohlprofil durch ein Hohlprofil, vorzugsweise durch ein Kunststoffhohlprofil, eines Fensters oder einer Tür mit in einer Richtung zwischen den sich gegenüberliegenden Außenwänden hintereinander angeordneten Hohlkammern gebildet ist, und in der Wandung der Siebhülse wenigstens zwei Gruppen von Austrittsöffnungen vorgesehen **sind** und wenigstens eine axial erstreckter Wandungsbereich ohne Austrittsöffnungen zwischen zwei Gruppen ausgebildet ist, wobei die Siebhülse und das Hohlprofil so aneinander angepasst sind, dass nach Einstecken der Siebhülse in eine sich von einer Außenwandung in das Hohlprofil erstreckten Bohrung die Austrittsöffnungen jeder Gruppe in eine andere mit Injektionskleber zu füllende Hohlkammer münden und der wenigstens eine axial erstreckte Wandungsbereich ohne Austrittsöffnungen eine andere nicht mit Injektionskleber zu füllende Hohlkammer vollständig durchsetzt, wobei eine nicht mit Injektionskleberzu füllende Hohlkammer zumindest gebildet ist durch die Hauptkammer, welche die größte aller Hohlkammern ist, vorzugsweise, in die ein Stahlverstärkungsprofil aufnehmbar ist. Vollständig durchsetzt bedeutet vorzugsweise, dass es keine Austrittsöffnungen gibt, die in diese, insbesondere nicht zu füllende Hohlkammer einmündet.

Im Verfahren wird die Aufgabe dadurch gelöst, dass durch eine der sich gegenüberliegenden Außenwände des Hohlprofils des Systems in die Tiefe des Hohlprofils, insbesondere in der Richtung der Beabstandung der sich gegenüberliegenden Außenwände, eine Bohrung erstellt wird, welche mindestens eine Hohlkammer durchsetzt, vorzugsweise welche wenigstens eine Hohlkammer beidseits der Hauptkammer durchsetzt, weiter bevorzugt die bis in die letzte Hohlkammer vor der gegenüberliegenden Außenwand reicht, wonach die Siebhülse des Systems in die Bohrung eingesetzt wird, in die Siebhülse ein härtbarer Injektionskleber injiziert wird, und das Verankerungselement in die Siebhülse eingeschoben wird, insbesondere unter Verpressung des Injektionsklebers durch die Austrittsöffnungen.

Ein Verpressen des Injektionsklebers durch Austrittsöffnungen kann auch schon bereits bei der Applikation des Injektionsklebers vor dem Einschieben des Verankerungselementes erfolgen.

Unter einem Wandungsbereich ohne Austrittsöffnungen wird verstanden, dass es in diesem Bereich keine Öffnung jeglicher Art gibt, durch die Injektionskleber aus dem Inneren der Siebhülse nach außen austreten kann.

Die Erfindung erschließt die direkte Befestigung von Elementen an einem Hohlprofil eines Fensters oder einer Tür, insbesondere an einem Kunststoffhohlprofil, wobei das Hohlprofil wenigstens zwei in einer Richtung zwischen den sich gegenüberliegenden Außenwänden, insbesondere hintereinander, angeordnete Hohlkammern umfasst, insbesondere das Hohlprofil wenigstens drei in einer Richtung zwischen den sich gegenüberliegenden Außenwänden, insbesondere hintereinander, angeordnete Hohlkammern umfasst, weiter bevorzugt das Hohlprofil beidseits einer Hauptkammer, insbesondere welche die querschnittsgrößte aller Hohlkammer ist, jeweils wenigstens eine weitere Hohlkammer aufweist.

Ein solches Befestigungssystem kann z.B. zur Lastabtragung eines Fenster- oder Türelementes oder zum Befestigen von Tür- oder Fensteranbauteilen (z.B. Eck- und Scherenlager, Schließblechverschraubung, Absturzsicherung, Raffstores etc.) an Hohlprofilen dienen, bevorzugt an solchen Hohlprofilen, die Blendrahmen, Flügelrahmen oder Pfosten eines Fensters oder einer Tür bilden.

Die Hohlprofile können vorzugsweise aus Kunststoff, insbesondere aus Thermoplasten wie PVC, PBT, aus glasfaserverstärktem Kunststoff oder aus metallischen Werkstoffen oder aus einer Kombination von vorgenannten Materialien bestehen, vorzugsweise als Extrusions- oder Strangpressprofil.

Als die Außenwände sind die beiden Wände zu verstehen, die bei bestimmungsgemäßer Anordnung des Profils in einem Rahmen dem Innenbereich eines Gebäudes bzw. dem Außenbereich eines Gebäudes zugewiesen sind. Diese beiden Wände weisen jeweils zum Profiläußeren, was in einem Gebäude bzw. außerhalb von einem Gebäude liegt. Es sind diejenigen Wände die nach einer fertigen Montage vom Gebäudeinneren bzw. Gebäudeäußeren sichtbar sind und diese Außenwände bilden somit auch die Sichtwände des Hohlprofils, insbesondere die bei bestimmungsgemäßer Montage Oberflächen parallel zu einer vertikalen Ebene haben, die parallel ist zu einer Glasscheibe, sofern in dem Rahmen eine eingelassen ist. Diese Außenwände sind Teil der äußeren Begrenzungsfläche, welche - insbesondere im Querschnitt senkrecht zur Längserstreckungsrichtung - das Hohlprofil außen umgibt.

Das Hohlprofil, insbesondere ein Kunststoffhohlprofil, ist vorzugsweise ein solches, welches für die Herstellung von Blendrahmen oder Flügelrahmen bei Fenster oder Türen eingesetzt wird. Hierfür werden mehrere Hohlprofile zu einem geschlossenen Rahmen zusammengefügt. Es ist üblicherweise als extrudiertes Profil ausgebildet, hat also über seine Längserstreckungsrichtung hinweg überall gleiche Querschnittform, betrachtet in einem Querschnitt senkrecht zur Längserstreckung. **In** einer Richtung zwischen den beiden Außenwänden des Hohlprofils sind in dem Hohlprofil hintereinanderliegend mehrere Hohlkammern angeordnet. Diese werden üblicherweise unterteilt in eine Hauptkammer und vorzugsweise mehrere Vorkammern. Die Hauptkammer weist vorzugsweise den größten Querschnitt auf, insbesondere dient diese zur Aufnahme eines Stahlverstärkungsprofils, insbesondere bei Kunststoffhohlprofilen, kann aber auch ohne darin einliegendem Stahlprofil ausgeführt sein.

Bei der Erfindung sollen bevorzugt solche vorgenannten Hohlprofile zum Einsatz kommen, insbesondere solche, bei denen in der Hauptkammer kein Stahlverstärkungsprofil eingesetzt ist, aber auch ein Stahlprofil eingesetzt sein kann. Sofern in dieser Erfindungsbeschreibung Merkmale anhand eines Kunststoffhohlprofils beschrieben werden, gilt dasselbe Merkmal auch für ein Metallhohlprofil, z.B. aus Aluminium.

Mit der Erfindung wird sichergestellt, dass aus den Austrittsöffnungen gezielt in diejenige wenigstens eine Hohlkammer der Injektionskleber injiziert wird, in den die Austrittsöffnungen münden, insbesondere die Austrittsöffnungen einer jeweiligen Gruppe münden, wobei weiterhin in dem wenigstens einen axial erstrecken Wandungsbereich ohne Austrittsöffnungen kein Injektionsmörtel aus der Siebhülse nach außen austreten kann. Dieser axial erstreckte Bereich kann vorzugsweise so positioniert sein, dass er nach Einstecken in ein Hohlkammerprofil der eingangsgenannten Art so positioniert ist, dass er eine Hohlkammer vollständig durchsetzt, die zumindest gebildet ist durch die Hauptkammer, somit also in diese Hohlkammer, zumindest die Hauptkammer, keine Austrittsöffnung der Gruppen einmündet, insbesondere auch keine andere Öffnung in der Wandung der Siebhülse einmündet. Es wird so erfindungsgemäß bevorzugt vermieden, dass die größte aller Hohlkammern mit Injektionskleber gefüllt wird, also von Injektionskleber frei bleibt, was Klebermasse einspart oder auch, dass andere nicht zu füllende Hohlkammern frei bleiben.

Erfindungsgemäß ist es bei der Erfindung vorgesehen, dass jede vorhandene Gruppe von Austrittsöffnungen genau nur einer einzigen mit Injektionskleber zu füllenden Hohlkammer zugeordnet ist, wobei jede Gruppe einer anderen zu füllenden Hohlkammer zugeordnet ist und somit die Öffnungen jeder Gruppe in eine andere zu füllende Hohlkammer einmünden.

Jeder axial erstreckte Bereich der Wandung ohne Austrittsöffnungen kann vorzugsweise einer Hohlkammer zugeordnet sein, insbesondere bei mehreren axial erstreckten Bereichen der Wandung ohne Austrittsöffnungen kann jeder Bereich jeweils einer anderen Hohlkammer zugeordnet sein, die nicht gefüllt werden soll oder darf.

So wird erzielt, dass der Injektionskleber durch die Austrittsöffnungen der Gruppen von Austrittsöffnungen nur in die mit Injektionskleber zu füllenden Hohlkammern verpresst wird, aber nicht in die Hauptkammer verpresst wird, weiter bevorzugt (auch) nicht in solche Hohlkammern verspresst wird, die eine Fluidverbindung zur äußeren Umgebung des Hohlprofils aufweisen. Vorzugsweise soll eine Befüllung von Hohlkammern mit dem Injektionskleber bei solchen Hohlkammern vermieden werden, die der Entlüftung / Belüftung und/oder Entwässerung des Kunststoffhohlprofils dienen, insbesondere um die für diese jeweilige Funktion benötigte Fluidverbindung nicht zu beeinträchtigen.

Im System ist somit eine nicht mit Injektionskleber zu füllende Hohlkammer zumindest gebildet durch die Hauptkammer, welche die größte aller Hohlkammern ist, vorzugsweise, in die ein Stahlverstärkungsprofil aufgenommen oder zumindest aufnehmbar ist, und/oder gebildet durch eine Kammer, vorzugsweise Vorkammer, welche, insbesondere betrachtet im Querschnitt senkrecht zur Längserstreckungsrichtung des Hohlprofils, eine Fluidverbindung zur äußeren Umgebung des Hohlprofils aufweist, vorzugsweise zumindest die unmittelbar an eine Außenwand innen angrenzende Hohlkammer, insbesondere die an diejenige Außenwand angrenzt, in welche die Bohrung zum Einsetzen der Siebhülse eingebracht ist.

Durch die Verklebung mit Injektionskleber steht die Hülse und das darin befindliche Verankerungselement in formschlüssiger und/oder kraftschlüssiger Verbindung zum Hohlprofil und zu daran angrenzenden Tür- oder Fensteranbauteilen.

Da die Siebhülse vorzugsweise nur durch eine der Außenwandungen in das Hohlprofil eindringt, nicht aber durch die gegenüberliegende Außenwandung wieder aus dem Hohlprofil austritt, wird erfindungsgemäß die Siebhülse und ein darin aufgenommenes Verankerungselement nur im Hohlprofil befestigt, weist aber keine Klebeverbindung zum Mauerwerk auf. Das umliegende Mauerwerk wird zur Lastabtragung somit nicht direkt genutzt.

Die Erfindung kann auch eine Lösung dafür erschließen, ohne die Verwendung von Stahlverstärkungen, an den Fensterelementen bzw. in deren Hohlprofilen auszukommen. Bislang werden die ausreichenden Festigkeiten der zusätzlich an das Element angebrachten Komponenten, üblicherweise über die Befestigung einer Schraube in die Stahlarmierung realisiert.

Die Erfindung erschließt es nun auch mit metallkernfreien Systemen, bzw. Hohlprofilen arbeiten zu können. Bei der Einbringung der Injektionsmasse unter Verwendung des erfindungsgemäßen Systems wird erreicht, dass diese teilweise aus den Austrittsöffnungen der Siebhülse in die Hohlkammern des Profils quillt, um so die Verbindung zwischen Siebhülse und Kunststoffprofil zu gewährleisten. Es ist vorzugsweise dabei vorgesehen, dass hierbei nicht jede der einzelnen Hohlkammern mit Injektionsmasse befüllt wird. Der Hintergrund hierzu ist, dass ansonsten die Funktionalität des Profils gestört werden könnte. Mit der profilspezifischen Siebhülse kann dies erzielt werden.

Durch die Verankerung des Verankerungselementes in dem Injektionskleber und über diesen in wenigstens einer Hohlkammer, bevorzugt in mehreren Hohlkammern, wird eine Festigkeit des Verankerungselementes im Hohlprofil erzielt, die vorzugsweise einer Verbindung, bei welcher das Verankerungselement in ein Stahlprofil eingeschraubt ist, gleichkommt.

Das erfindungsgemäße System kann somit sowohl mit Hohlprofilen eingesetzt werden, die eine Stahlprofilverstärkung aufweisen, also auch mit solchen, die keine Stahlprofilverstärkung aufweisen.

**In** bevorzugter Ausführung ist es vorgesehen, dass in der Wandung der Siebhülse wenigstens zwei Gruppen von Austrittsöffnungen vorgesehen sind, wobei wenigstens ein axial erstreckter Bereich der Wandung ohne Austrittsöffnungen zwischen zwei Gruppen ausgebildet ist.

Hierdurch wird erreicht, dass die Siebhülse wenigstens zwei Befestigungsorte im Hohlprofil hat, die jeweils in einer Hohlkammer liegen, wobei zwischen diesen beiden der Befestigung dienenden Hohlkammern wenigstens eine weitere Hohlkammer liegt, z.B. die Hauptkammer mit oder ohne Stahlprofil liegt, in die kein Kleber injiziert wird. Durch die axiale Beabstandung der Befestigungspunkte wird eine besonders hohe Stabilität des Verankerungselementes erzielt unter Einsparung von Kleber im Vergleich zu einem Verkleben über alle Hohlkammern hinweg.

Dabei kann vorzugsweise vorgesehen sein, dass die axiale Länge wenigstens eines Bereiches ohne Austrittsöffnungen größer ist als der Abstand, vorzugsweise der in der Richtung zwischen den Außenwänden gemessene Abstand, der die Hauptkammer umgrenzenden Innenwände des Hohlprofils. Insbesondere kann die axiale Länge größer sein als 20%, weiter bevorzugt größer sein als 30%, weiter bevorzugt größer sein als 40% der axialen Gesamtlänge der Siebhülse.

Eine bevorzugte Weiterbildung aller möglichen Ausführungen kann es vorsehen, dass zumindest eine der Gruppen, vorzugsweise jede Gruppe genau eine in Umfangsrichtung um die Mittelachse herum ausgebildete ringförmige Anordnung von Austrittsöffnungen aufweist. Bevorzugt weist dabei die wenigstens eine Gruppe / jede Gruppe eine axiale Länge auf, die der axialen Erstreckung der in axialer Richtung größten Austrittsöffnung dieser Gruppe entspricht. Die Austrittsöffnungen einer solchen Gruppe haben vorzugsweise alle den gleichen Querschnitt oder gleiche Größe und/oder die Mittelpunkte aller Öffnungen in der Oberfläche der Wandung liegen alle auf demselben Umfangskreis. Die Austrittsöffnungen einer Gruppe können auch innerhalb der Gruppe unterschiedliche Größe / unterschiedlichen Querschnitt aufweisen.

Es kann weiterhin vorgesehen sein, dass die axiale Länge wenigstens eines Bereiches ohne Austrittsöffnungen zwischen zwei benachbarten Gruppen größer ist als das n-fache der axialen Länge von jeder der benachbarten Gruppen, wobei n>=2 ist, vorzugsweise n>=3 ist, weiter bevorzugt n>=4 ist, weiter bevorzugt n>=5 ist. Hierdurch können die Gruppen auf einfache Weise so beabstandet sein, dass zwischen zwei benachbarten Gruppen und somit im Bereich der Wandung ohne Austrittsöffnungen eine Innenwand des Hohlprofils liegt, die zwei benachbarte Hohlkammer voneinander trennt.

Dabei ist vorzugsweise weiterhin vorgesehen, dass die axiale Länge wenigstens eines Bereiches ohne Austrittsöffnungen zwischen zwei benachbarten Gruppen, insbesondere eines Bereichs ohne Austrittsöffnungen, der nicht der Hauptkammer zugeordnet ist, kleiner ist als der Abstand von zwei Innenwänden im Hohlprofil, welche zwei benachbarte Hohlkammern umgeben, insbesondere nach außen umgrenzen. Insbesondere wird so oder durch andere Maßnahmen sichergestellt, dass jede der beiden Gruppen in genau (nur) einer von zwei benachbarten Hohlkammern liegt.

Die Erfindung sieht vorzugsweise in einer Weiterbildung für alle möglichen Ausführungen vor, dass auch in einem axialen Anfangsbereich zwischen der Injektionsöffnung und der in axialer Richtung folgenden ersten Gruppe von Austrittsöffnungen ein Bereich ohne Austrittsöffnungen ausgebildet ist, insbesondere wobei die axiale Länge dieses Anfangsbereichs der Siebhülse ohne Austrittsöffnungen größer ist als der Abstand der Innenwand der ersten an die Außenwand angrenzenden Hohlkammer, insbesondere der Vorkammer, von der Außenwand.

Hierdurch wird erzielt, dass die erste Gruppe von Austrittsöffnungen so weit von der Injektionsöffnung beabstandet ist, dass die erste an die Bohrungsöffnung in der Außenwand des Hohlprofils angrenzende Hohlkammer, insbesondere Vorkammer, nicht mit Injektionskleber gefüllt wird. Die axiale Länge entspricht vorzugsweise mindestens der Tiefe der ersten Hohlkammer, insbesondere zuzüglich der Dicke der Außenwand, ggfs. zzgl. der Dicke der Innenwand zwischen der ersten und zweiten Hohlkammer. Diese erste Hohlkammer / Vorkammer hat häufig eine funktionale Bedeutung, z.B. für die Entwässerung, so dass deren Funktion so sichergestellt bleibt.

Eine Weiterbildung kann für alle möglichen Ausführungsvarianten vorsehen, dass die Siebhülse am axialen Ende mit der Injektionsöffnung ohne Kragen ausgebildet ist. So kann die Siebhülse bis unter die Oberfläche der Außenwand oder bündig mit dieser in die Bohrung eingeschoben werden, ohne dass sich ein Überstand durch die Siebhülse ergibt.

Vorzugsweise sieht die Erfindung bei der Siebhülse vor, dass diese am axialen Endbereich, welcher die Injektionsöffnung umfasst, wenigstens eine, vorzugsweise wenigstens zwei von der Wandung nach radial außen vorspringende Rastnasen aufweist, insbesondere mit denen ein Bohrungsrand in der Begrenzungsfläche, insbesondere in der Außenwand eines Hohlprofils hintergreifbar ist. So wird sichergestellt, dass eine eingeschobene Siebhülse nicht versehentlich wieder herausgezogen wird, z.B. nach der Applikation des Injektionsklebers.

Als vorteilhaft wird es dabei angesehen, wenn jede Rastnase auf einer in radialer Richtung federnd nachgiebigen Lasche angeordnet ist, die von zwei in axialer Richtung in der Wandung verlaufenden zueinander parallelen Schlitzen umgrenzt ist. So können die Rastnasen beim Einschieben der Siebhülse am Bohrungsrand nach radial innen zurückweichen.

Eine vorteilhafte Ausgestaltung aller möglichen Ausführungsvarianten sieht vor, dass die Siebhülse wenigstens drei, vorzugsweise wenigstens vier in axialer Richtung auf der Innenseite der Wandung verlaufende Stege aufweist, zwischen denen in Inneren der Siebhülse ein Verankerungselement aufnehmbar ist, insbesondere das Verankerungselement in Inneren der Siebhülse zentrierbar ist.

Hierdurch wird zwischen einem Verankerungselement und der Innenwand der Siebhülse ein Spalt gebildet, der in Umfangsrichtung um die Mittelachse durch die Stege in mehrere Abschnitte, insbesondere eine der Anzahl der Stege entsprechende Anzahl von Abschnitten getrennt ist.

**In** Verbindung mit der zuvor genannten Ausführung mit Laschen kann vorgesehen sein, das jede Lasche einen axialen Anfangsbereich des Steges umfasst, insbesondere wobei der Steg am freien Ende der Lasche eine Überhöhung aufweist. Der Steg beginnt also in / auf der Lasche und setzt sich von dort aus in axialer Richtung fort.

Ein jeweiliger Steg kann über die gesamte Länge der Siebhülse auf deren inneren Oberfläche der Wandung erstreckt sein oder auch nur über einen Teilbereich der Siebhülsenlänge.

Eine bevorzugte Ausführung kann weiterhin vorsehen, dass die Siebhülse als Spritzgußteil ausgebildet ist.

Bevorzugt ist dabei vorgesehen, dass jede Austrittsöffnung, vorzugsweise jede Öffnung in der Wandung eine Erstreckung, vorzugsweise zumindest eine mittlere Erstreckung aufweist, die senkrecht liegt zu derselben, die Mittelachse umfassenden Ebene, vorzugsweise wobei jede Öffnung sich nach außen im Querschnitt erweitert.

Hierdurch kann die Siebhülse besonders einfach im Spritzgussverfahren hergestellt werden, wobei zwei Teilformen genutzt werden, die mit einer Linearbewegung, die der genannten Erstreckung, zumindest der mittleren Erstreckung entspricht, beim Entformen bewegt werden. Beide Teilformen sind im geschlossenen Zustand der Form um die genannte Ebene herum ausgebildet.

Vorzugsweise bilden alle Austrittsöffnungen durch die Wandung der Siebhülse hindurchreichende Kanäle, die alle in der Entformungsrichtung der Teilformen verlaufen, insbesondere was bedeutet, dass diese im Winkel von 90 Grad zur Trennebene der Teilformen des Spritzguß-Werkzeugs verlaufen.

In den verschiedenen möglichen Ausführungen kann es weiterhin vorgesehen sein, dass die Siebhülse eine solche axiale Länge aufweist, dass diese nach Einsetzen in die Bohrung im Hohlprofil mit einem axial offenen Ende innen an die Außenwand oder eine Innenwand des Hohlprofils kontaktierend anliegt, insbesondere wobei die Stirnfläche der Injektionsöffnung bündig mit der gebohrten Begrenzungsfläche, insbesondere der Außenwand oder unter dieser liegend ist. In diesem Fall verschließt somit die Innenwand das der Injektionsöffnungen gegenüberliegende offenen Ende der Siebhülse.

Das erfindungsgemäße Befestigungssystem zum Befestigen angrenzender Tür- oder Fensteranbauteile wie z.B. Eck- und Scherenlager, Schließblechverschraubung, Absturzsicherung und den Raffstores an Hohlprofilen, wird in der folgenden Beschreibung der Erfindung an der Ausführungsform eines Blendrahmens beschrieben. Selbstverständlich gilt die Erfindung auch für vergleichbare Kunststoffholprofile, wie z.B. Flügelrahmen- oder Pfostenprofile oder auch für Metall-Hohlprofile, z.B. aus Aluminium.

Die Montage für ein Befestigungssystem lässt sich an den folgenden Verfahrensschritten darstellen.

Der Blendrahmen ist durch eine umlaufende und geschlossene Außenkontur-Begrenzungsfläche gebildet ist, welche Hohlkammern einschließt. Gemeint sind hier die Hauptkammer, als auch die Vorkammern.

Im Blendrahmen wird ein Bohrloch hergestellt, welches sich durch die Außenkontur-Begrenzungsfläche und mindestens durch eine Hohlkammer hindurch erstreckt.

**In** diese Bohrung wird die Siebhülse, die aus Kunststoff oder Metall gefertigt sein kann und welche vorzugsweise endseitig geschlossen ist, eingesetzt und die Injektionsmasse wird in das offene Ende der Siebhülse injiziert. Ebenso könnte eine beidseitig offene Hülse eingesetzt werden, wenn das innere offene Ende exakt vor einer Innenwand des Hohlprofils endet. Damit wäre dieses Ende ebenfalls für einen Dichtstoff geschlossen.

Die Siebhülse weist eine Gesamtlänge auf, die maximal der Tiefe des Bohrloches entspricht. Die Siebhülse ist in Teilbereichen mit ringförmig angeordneten Austrittsöffnungen z.B. in unterschiedlicher oder auch gleicher Größe, versehen. Bei der Siebhülse handelt es sich um ein vorzugsweise im Spritzgussverfahren hergestelltes Werkstück. Aus wirtschaftlichen Gründen werden bevorzugt sogenannte Auf -/ Zuwerkzeuge verwendet, die an einer Trennebene zusammengeführt werden und nach dem Spitzvorgang zum Entformen des Werkstücks auch dort voneinander getrennt werden.

Um ein rückstandsloses Entformen zu gewährleisten, ist das Spritzguß-Werkzeug so zu konstruieren, dass insbesondere Hohlräume, wie zum Beispiel die Austrittsöffnungen bzw. Kanäle in der Siebhülse, so gestaltet sind, dass die begrenzenden Öffnungswände bzw. Kanalwände in Entformungsrichtung verlaufen. Ziel der Entformung ist stets ein rückstandsloses und leichtes Entfernen der Spritzgussformen. Hinterschnitte oder andere Verwinkelungen benötigen kompliziertere, meist mehrteilige Spritzgusswerkzeuge mit Schiebern. **In** diesem Fall werden die Wände der Austrittsöffnungen / Kanäle direkt in der Entformungsrichtung ausgerichtet.

**In** dieser Ausführungsform sind radial außen auf der Wandung der Siebhülse nahe von deren Ende, insbesondere aber mit einem Abstand zum Ende, welcher vorzugsweise kleiner gleich der Dicke der gebohrten Außenwand ist, wenigstens zwei Rastnase angeformt. Die Rastnasen wirken wie Widerhaken, die beim Klebeprozess die Siebhülse fixieren, sodass sie nicht aus dem Profil gezogen wird.

Die Injektionsmasse wird in das offene Ende der Siebhülse, mittels Einbringen einer Einspritzdüse appliziert. Durch den vorzugsweise konischen Verlauf der Einspritzdüse, wirkt diese klemmend mit der Siebhülse zusammen und beim anschließenden Ausbringen der Einspritzdüse behält die Siebhülse dennoch ihre Position, da sie mit den Rastnasen an Ort und Stelle gehalten wird. Ohne die Rastnasen würde die Siebhülse durch die klemmende Wirkung und insbesondere in Kombination mit der klebrigen Injektionsmasse, wieder herausgezogen.

Anschließend wird z.B. eine Gewindestange als Verankerungselement in die Siebhülse mit formbarer Injektionsmasse eingedreht.

Im Inneren der Siebhülse sind vier Längsstege platziert, wodurch ein geführtes Eindrehen der Gewindestange in die Siebhülse mit formbarer Injektionsmasse gewährleistet ist. Zudem erhöhen diese die Eigensteifigkeit der Hülse.

Die Gewindestange liegt an den vier Längsstegen an und bildet zwischen den Längsstegen einen definierten Spalt, der Raum für die Injektionsmasse bietet. Der definierte Spalt ist zwischen allen Längsstegen gleich und bietet Raum für eine gleichmäßige Aufnahme von Injektionsmasse. Jeder Spalt kann das gleiche Volumen an Injektionsmasse aufnehmen. Dies ist vorteilhaft, denn somit werden die Gewindegänge in der Injektionsmasse eingebettet. Nach der Aushärtung der Injektionsmasse ist die Gewindestange kraft- und formschlüssig mit der Injektionsmasse verbunden und damit fest im Profil.

Eine alternative Ausführungsform besteht aus einem Innengewindeanker als Verankerungselement, der mit einer Sacklochbohrung, sowie einem Außen- und ein Innengewinde versehen ist. Der Innengewindeanker bietet durch das Außengewinde die gleiche Funktion, wie eine Gewindestange, indem sie beim Hereindrehen in die Siebhülse die Injektionsmasse durch die Austrittsöffnungen herausdrückt. Gleichzeitig bietet ein Innengewindeanker durch sein Innengewinde die Möglichkeit, andere Befestigungsmittel, die über Gewinde eindrehbar sind, dort anzubringen. Anzufügenden Fensterbauteilen können so beispielsweise mit Befestigungsschrauben montiert werden.

Besonders auffällig sind die zwei separierten Gruppen der Austrittsöffnungen, durch die der injizierte Injektionskleber austritt. Insbesondere die Form und Größe können anders gestaltet sein. Ursächlich hierfür ist, dass auf diese Weise eine gleichmäßige Klebstoffapplikation in die einzelnen angrenzenden Hohlkammern erzielt werden kann und der Injektionskleber die Hohlkammer, gemäß der Anordnung der Austrittsöffnungen auffüllt. Somit kann die Siebhülse als "\profilspezifische" Siebhülse verstanden werden, da die Größe und Anordnung der Austrittsöffnungen die Injektionsmenge bestimmen. Der Injektionskleber hat die Eigenschaften eines formbaren, aushärtbaren Klebstoffs.

Die Gewindestange weist einen umlaufenden Spalt zur inneren Oberfläche der Siebhülse auf und verfügt über einen kleineren Durchmesser und eine größere Länge gegenüber der Siebhülse.

Bei dieser Ausführungsform sind, z.B. bei Verwendung einer M6 Gewindestange und einer konstanten Wandstärke ein Innendurchmesser von 8 mm und ein Außendurchmesser von 10 mm bei der Siebhülse festgelegt. Demzufolge ergibt sich ein umlaufender Spalt mit einer Breite von 1 mm, welcher von der Injektionsmasse ausgefüllt wird.

Mit dem Aushärten der Injektionsmasse ist der letzte Schritt zur Montage des Befestigungssystems vollzogen.

Wird das Kleben in Bezug auf Kunststoffe betrachtet, so ergeben sich besondere Herausforderungen. Viele Kunststoffe enthalten Weichmacher, sodass gewünschte Eigenschaften wie bspw. eine Verbesserung der Flexibilität erreicht werden. Im Laufe der Zeit migrieren diese Weichmacher oftmals aus den Kunststoffen, sodass ein Wandern in die Klebstoffschicht wahrscheinlich ist. Dies hat zur Folge, dass die Klebstoffverbindung geschwächt wird. Obendrein haben Kunststoffe, besonders Thermoplaste, häufig eine niederenergetische unpolare Oberfläche, wodurch die Benetzbarkeit stark eingeschränkt wird. Aufgrund dessen, dass diese Kunststoffe nur sehr restriktiv angegriffen werden können, stellt die Diffusionsklebung in der Regel keine Möglichkeit zur Verklebung dar.

Dementsprechend ist die Adhäsionsklebung durch ihre zwischenmolekulare Wechselwirkung eine gebräuchliche Verbindung. Infolge einer gezielten Vorbehandlung, wie dem Reinigen der Benetzungsfläche oder durch den Einsatz von geeigneten Aktivatoren bzw. Primern, kann die Adhäsionskraft sowie die Haltbarkeit der Fügestelle maßgeblich optimiert werden.

Geeignet sind Klebstoffe als Einkomponenten- oder Zweikomponentenklebstoffe. Während Einkomponentenklebstoffe ohne Zusatzkomponente abbinden, reagieren Zweikomponentenklebstoffe erst beim Mischen der zwei Komponenten.

Die Funktionalitäten der verschiedenen Hohlkammern dürfen durch den Klebstoff nicht beeinträchtigt werden.

Diese verfügen alle über einen oder mehrere technische Hintergründe. So dienen gewisse Vorkammern unter anderem der Entwässerung, dem Druckausgleich und der Vorkammerbelüftung. Zudem besitzt das Profil Kammern, die dem Profil konstruktiv bedingt die nötige Stabilität verleihen oder der Wärmedämmung dienen.

Nachfolgend werden somit die Funktionen der Kammern, welche vorzugsweise unberührt bleiben sollen, speziell an dem eingesetzten Profil beschrieben. Eine detaillierte Beschreibung erfolgt anhand der Entwässerung und der Vorkammerbelüftung. In den Kammern, die zum Außenbereich ausgerichtet und somit den Witterungsbedingungen ausgesetzt sind, kann sich bei farbigen Elementen ein Wärmestau entwickeln. Ein solcher Wärmestau würde eine Verformung des Profils herbeirufen. Dies kann durch eine entsprechende Entlüftungsfräsung in den Hohlkammern vermieden werden. Eine vergleichbar hohe Relevanz tragen bei eindringendem Wasser die Entwässerungskammern. Das auf dem Falzbereich befindliche Wasser, fließt durch die als Langloch gefräste, Einlassöffnung in eine Vorkammer, wonach dann über eine Auslassöffnung entwässert wird.

Hinsichtlich der Verklebung ist es ausschlaggebend, dass diese Hohlkammern unberührt bleiben und nicht verklebt werden, um die Funktionen dieser Kammern zu erhalten. Ebenso verhält es sich bei der Vorkammerbelüftung.

Die zuvor bereits erwähnte Hauptkammer beansprucht die größte Querschnittsfläche des Profils, weshalb ein vollständiges Befüllen der Kammer mit Klebstoff aus wirtschaftlichen Gesichtspunkten nicht sinnvoll wäre und vorteilhafter Weise vermieden wird.

Die profilspezifische Siebhülse ermöglicht durch ihre ausgearbeitete, konstruktive Gestaltung eine optimale Klebstoffverteilung in die angestrebten Kammern.

Die Erfindung wird nachfolgend mit Bezug auf die Zeichnungen näher erläutert.

Die Figuren zeigen im Einzelnen:
- Fig. 1: zeigt einen Blendrahmen mit Bohrloch in perspektivischer Ansicht
- Fig. 2a: zeigt einen Blendrahmen mit Bohrloch und eingesetzter Siebhülse in perspektivischer Ansicht
- Fig. 2b: zeigt einen Blendrahmen mit eingesetzter Siebhülse in 2D - Schnittansicht
- Fig. 3a: zeigt einen Blendrahmen mit montierter Gewindestange und Injektionsmassenaustritt in perspektivischer Ansicht
- Fig. 3b: zeigt einen Blendrahmen mit montierter Gewindestange und Injektionsmassenaustritt in 2D - Schnittansicht
- Fig. 4a: zeigt eine Siebhülse in perspektivischer Ansicht
- Fig. 4b: zeigt die Siebhülse geschnitten in perspektivischer Ansicht
- Fig. 4c: zeigt die Siebhülse in der 2D-Seitenansicht

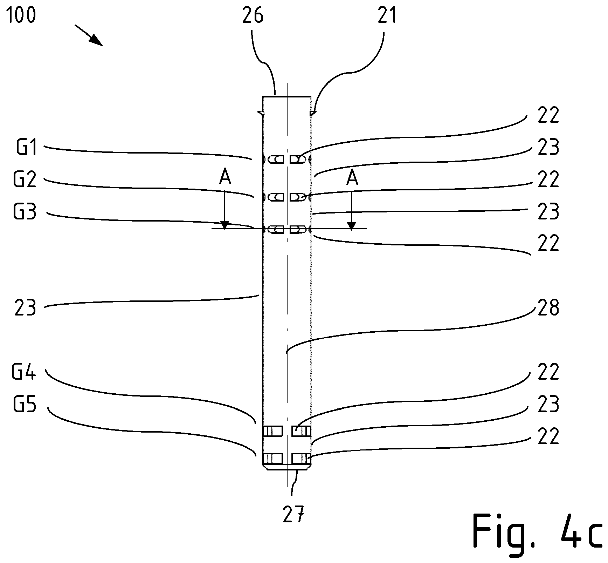

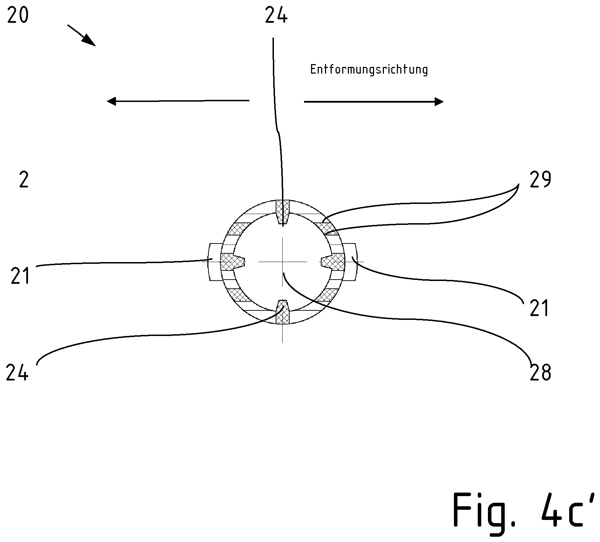

- Fig. 4c': zeigt die Siebhülse in der 2D-Seitenansicht A-A gemäß der Seitenansicht nach Figur 4c

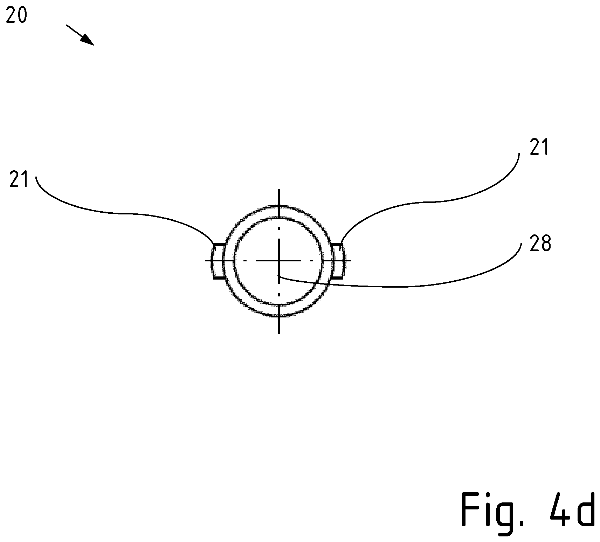

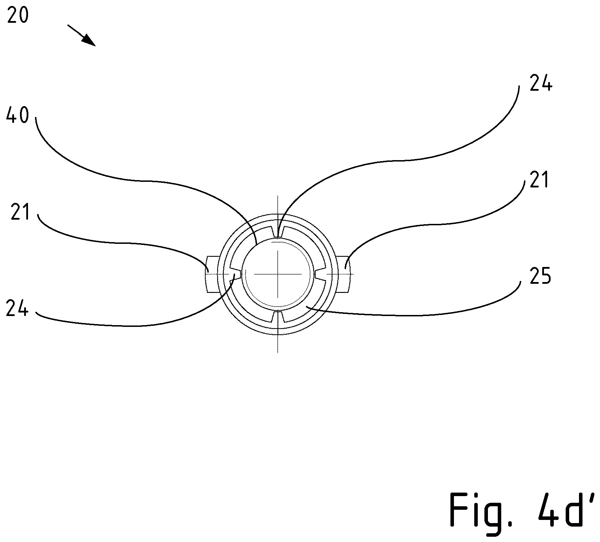

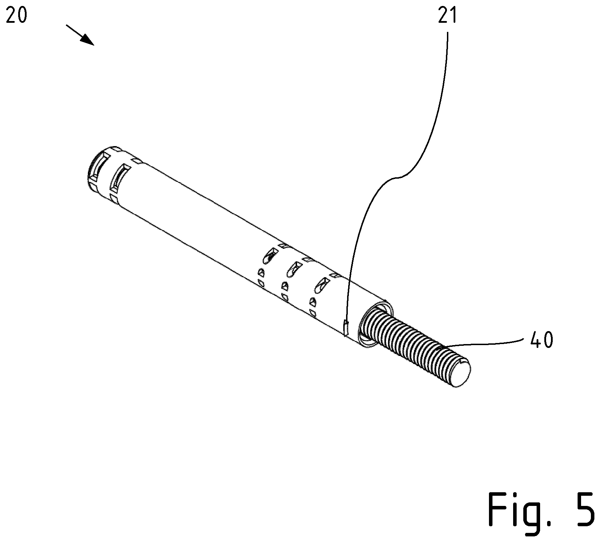

- Fig. 4d: zeigt die Siebhülse in der 2D-Draufsicht vom geschlossenen Ende aus mit montierter Gewindestange gemäß Figur 5
- Fig. 4d': zeigt die Siebhülse in der 2D-Draufansicht vom offenen Ende aus gemäß Figur 5
- Fig. 5: zeigt die Siebhülse mit montierter Gewindestange in perspektivischer Ansicht

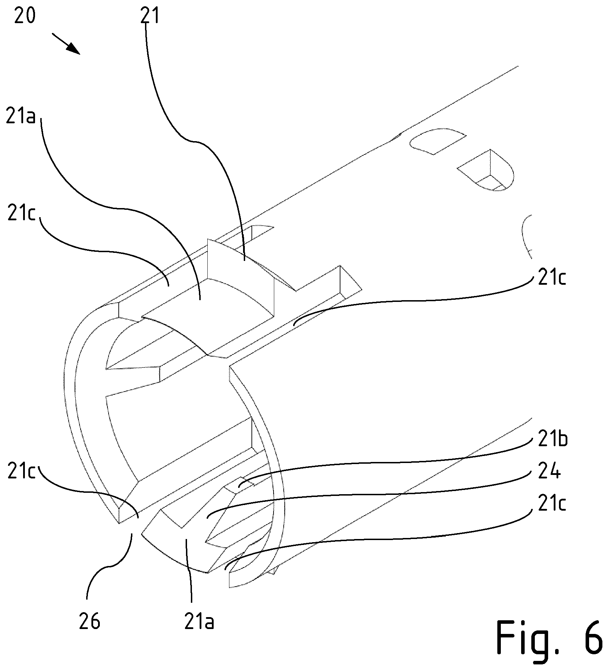

- Fig. 6: zeigt eine weitere Ausführungsform der Siebhülse mit Lasche in perspektivischer Ansicht

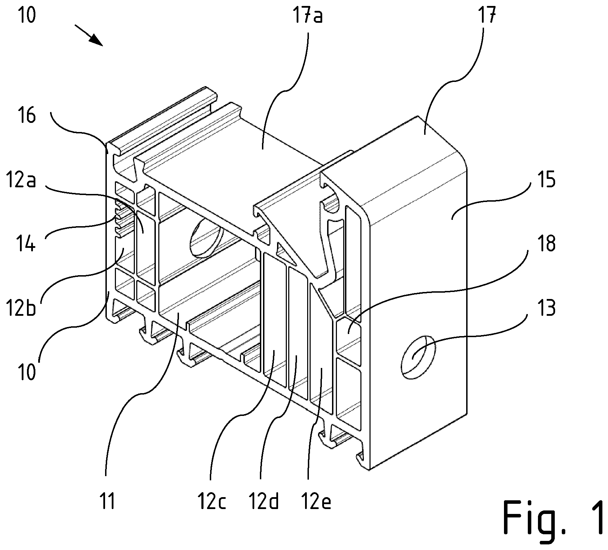

Figur 1 zeigt einen Ausschnitt aus einem Blendrahmen 10 als Hohlprofil mit Bohrloch 13 in perspektivischer Ansicht. Der Blendrahmen 10 ist durch eine umlaufende und geschlossene Außenkontur-Begrenzungsfläche 17 gebildet ist, welche Hohlkammern einschließt. Gemeint sind hier die Hauptkammer 11, als auch die Vorkammern 12a, 12b, 12c, 12d, 12e, 18. Die sich gegenüberliegenden Außenwände 15 und 16 sind Teil dieser Begrenzungsfläche.

Im Blendrahmen 10 wird ein Bohrloch 13 hergestellt, welches sich durch die Außenkontur-Begrenzungsfläche 17 bzw. der Außenwand 15 und mindestens durch eine Hohlkammer, vorzugsweise durch die Hauptkammer 11 und zwei beidseits darum angeordnete Hohlkammern 12a, 12c, hier vorzugsweise durch alle Hohlkammern hindurch erstreckt. Hierbei ist es denkbar, dass Fensteranbauteile sowohl an der dem Rauminneren zugewiesenen Außenwand 16, die eine Innensichtfläche bildet, angesetzt werden als auch an der eine Außensichtfläche bildenden zur äußeren Umgebung weisenden Außenwand 15, also wetterseitig angeordnet sein können.

Eine beidseitige Montage von Fensteranbauteilen, als auch eine Anbringung an der Begrenzungsfläche 17 im Falzbereich ist ebenfalls möglich. Wetterseitig können beispielsweise Absturzsicherungen und /oder Raffstore befestigt werden. Rauminnenseitig ist z.B. die Montage von Eck- und Scherenlagern möglich und im Falzbereich werden z.B. Schließverschraubungen vorgenommen.

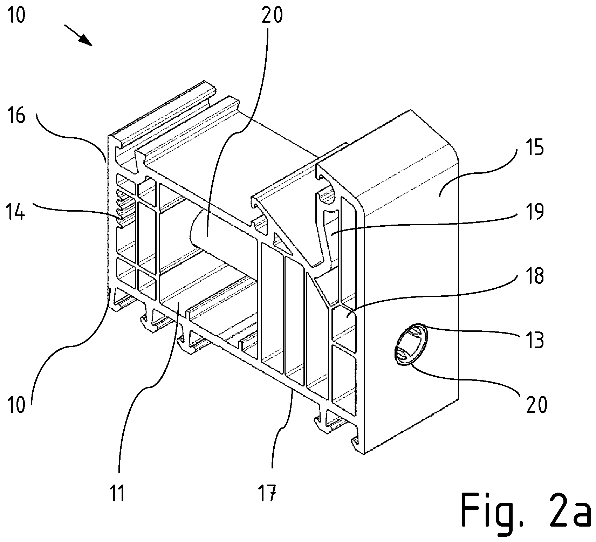

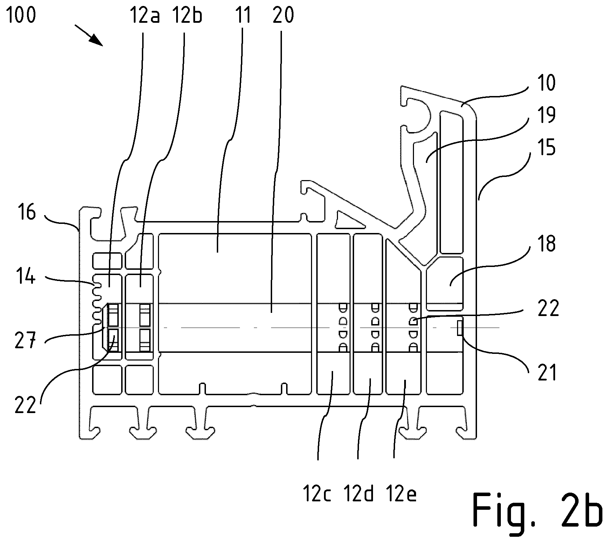

Figur 2a zeigt einen Blendrahmen 10 mit Bohrloch 13 und eingesetzter Siebhülse 20 in perspektivischer Ansicht und Figur 2b zeigt einen Blendrahmen 10 mit eingesetzter Siebhülse 20 in 2D - Schnittansicht. Bei der Betrachtung des abgebildeten Blendrahmens 10 ist die Vielzahl der einzelnen Hohlkammern auffällig. Diese verfügen alle über einen oder mehrere technische Hintergründe. So dienen gewisse Vorkammern unter anderem der Entwässerung, dem Druckausgleich und der Vorkammerbelüftung. Zudem besitzt das Hohlprofil vorzugsweise Hohlkammern, die dem Hohlprofil konstruktiv bedingt die nötige Stabilität verleihen oder der Wärmedämmung dienen.

Die Lage der Siebhülse 20 und deren Anpassung an das Hohlprofil ist so gewählt, dass die Funktionalitäten der Hohlkammern nicht durch die Injektionsmasse beeinträchtigt werden.

Die Siebhülse 20 verfügt über separierte Gruppen G von Austrittsöffnungen 22, 23, durch die die injizierte Injektionsmasse austreten kann. Die Gruppen G sind separiert durch Wandungsbereiche der Siebhülse ohne Austrittsöffnungen, insbesondere deren axiale Erstreckung größer ist als die axialer Erstreckung einer Gruppe. Die Siebhülse 20 ist in einer jeden Gruppe mit ringförmig angeordneten Austrittsöffnungen 22, 23 z.B. in unterschiedlicher Größe und Form oder mit gleicher Größe und Form, versehen.

Bei einer alternative Ausführungsform (nicht dargestellt) kann das Ende der Siebhülse 27 auch offen gestaltet sein. In diesem Fall würde Injektionskleber 30 nicht nur durch die Austrittsöffnungen 22 in die Hohlkammer 12a gelangen, sondern auch direkt aus dem offenen Ende in die Hohlkammer 12a eintreten und diese, entweder vollständig oder zumindest teilweise, ausfüllen.

Erfindungswesentlich ist, dass auf diese Weise eine gleichmäßige Klebstoffapplikation in die einzelnen angrenzenden Hohlkammern erzielt werden kann und die Injektionsmasse die Hohlräume, gemäß der Anordnung der Austrittsöffnungen 22, 23 auffüllt. Somit erklärt sich der Begriff der "profilspezifischen" Siebhülse, womit die Größe und Anordnung der Austrittsöffnungen 22, 23 die Injektionsmenge steuerbar bestimmen.

**In** dieser Ausführungsform sind im radial außen liegenden Bereich der Wandung der Siebhülse, insbesondere im Bereich der Injektionsöffnung, zwei Rastnasen 21 angeformt. Die Rastnasen 21 wirken wie Widerhaken, die beim Klebeprozess die Siebhülse 20 im Blendrahmen fixieren, sodass die Siebhülse 20 nicht aus dem Blendrahmen 10 gezogen wird. **In** dieser Ausführung weist die Siebhülse vorzugsweise keinen Kragen im Bereich der Injektionsöffnung auf.

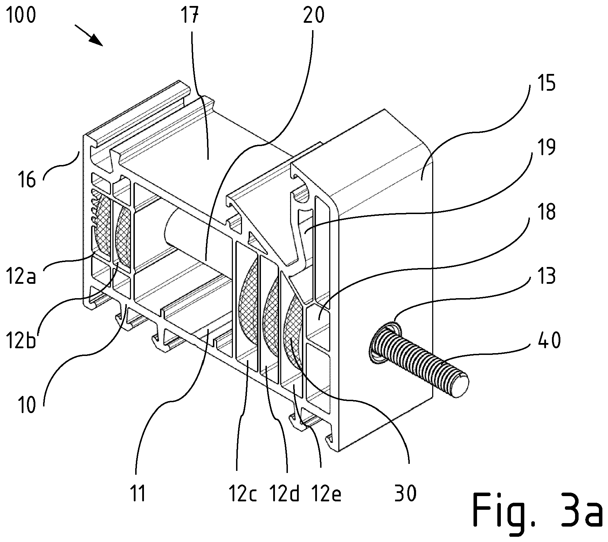

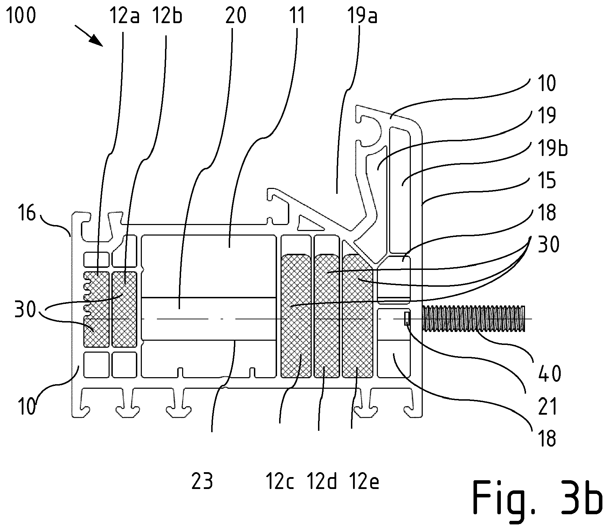

Figur 3a zeigt einen Blendrahmen 10 mit montierter Gewindestange 40 als Verankerungselement und ausgetretenem Injektionskleber 30 in perspektivischer Ansicht und Figur 3b zeigt einen Blendrahmen 10 mit montierter Gewindestange 40 und ausgetretenen Injektionskleber 30 in der 2D - Schnittansicht.

Der Injektionskleber 30 tritt nicht in die Hohlkammern aus, welche in ihrer Funktion unberührt bleiben müssen oder bei denen ein Austritt unerwünscht ist. Hier sind besonders die Kammern betroffen, die für die Entwässerung und die Vorkammerbelüftung vorgesehen sind.

Eine hohe Relevanz tragen bei eindringendem Wasser die Entwässerungskammern 19. Das in der Entwässerungshohle 19a befindliche Wasser, fließt durch die als Langloch gefräste, Einlassöffnung in eine Entwässerungskammern 19, von dort in die Vorkammer 18, wonach dann über Auslassöffnung entwässert wird.

**In** den Hohlkammern, die zum Außenbereich ausgerichtet und somit den Witterungsbedingungen ausgesetzt sind, kann sich bei farbigen Elementen ein Wärmestau entwickeln. Ein solcher Wärmestau würde eine Verformung des Profils zur Folge haben. Dies kann durch eine entsprechende Entlüftungsfräsung in den Hohlkammern 19b, vermieden werden.

Der Injektionskleber verteilt sich, durch die Anordnung der Austrittsöffnungen 22 der Gruppen G, zwangsläufig in den Vorkammern 12a, 12b, 12c, 12d, und 12e. Hier ist eine willkürliche Verteilung des Injektionsklebers 30 unproblematisch. Entscheidend ist, dass sich der Injektionskleber 30 um die Siebhülse 20 und den umgebenden Bereichen der Vorkammern 12a, 12b, 12c, 12d, und 12e ausdehnt und zur Aushärtung kommt. Die profilspezifische Siebhülse 20 ermöglicht vorzugsweise durch ihre ausgearbeitete, konstruktive Gestaltung eine optimale Verteilung des Injektionsklebers 30 in die Vorkammern 12a, 12b, 12c, 12d, und 12e.

Auszugsversuche auf dem Prüfstand zeigen eine außerordentlich positive Widerstandsfähigkeit gegen Auszug. Die profilspezifischen Siebhülse 20 kann nur mit beträchtlich höheren Auszugkräften gelockert und nicht zerstörungsfrei entfernt werden, denn sie ist fest mit der Injektionsmasse 30 verbunden.

Als Verankerungselement dient z.B. eine Gewindestange 40, die die Siebhülse 20 zumindest anteilig in ihrem Innenraum aufnimmt. Gekennzeichnet ist die Gewindestange 40 vorzugsweise dadurch, dass sie in formschlüssiger und/oder kraftschlüssiger Verbindung zu angrenzenden Tür- oder Fensteranbauteilen am Blendrahmen 10 steht.

Die Gewindestange weist im in die Siebhülse eingesteckten Zustand einen umlaufenden Spalt 25 zur Innenwandung der Siebhülse 20 auf und verfügt über einen kleineren Durchmesser und eine größere Länge gegenüber der Siebhülse 20.

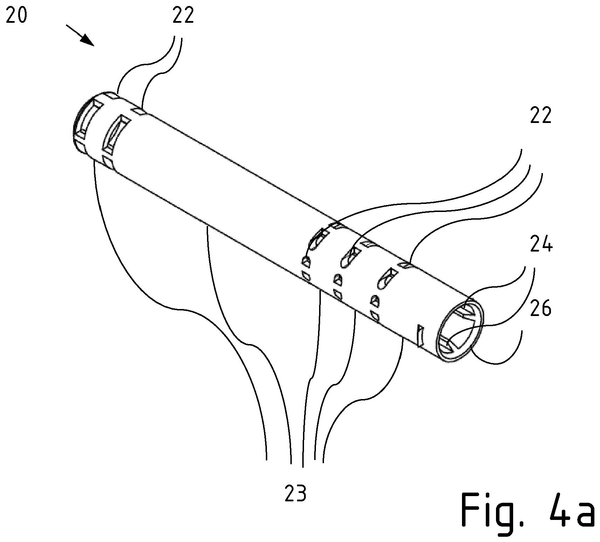

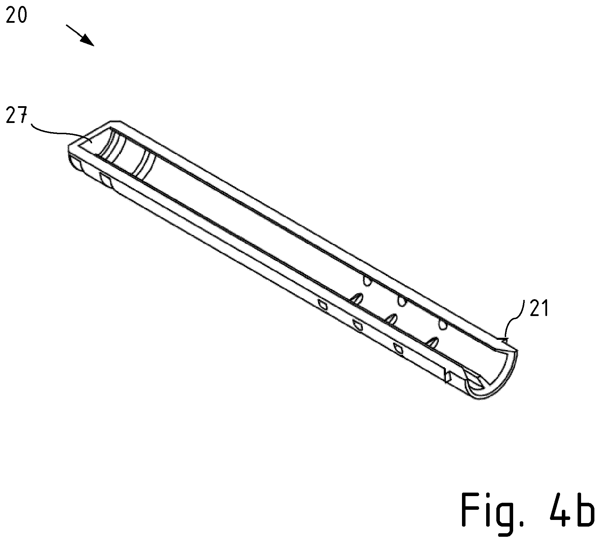

In Figur 4a ist eine Siebhülse 20 in perspektivischer Ansicht und in Figur 4b geschnitten in perspektivischer Ansicht, nach der Erfindung dargestellt. Die Siebhülse 20 weist eine Gesamtlänge auf, die vorzugsweise maximal der Tiefe der Bohrung 13 entspricht. Die Siebhülse 20 ist in Teilbereichen mit ringförmig angeordneten Austrittsöffnungen 22in z.B. unterschiedlicher Größe, versehen. Die Siebhülse ist mit einem offenen und einem geschlossenen 26, 27 Ende gestaltet. Das geschlossene Ende schlägt vorzugsweise, wie in Figur 2b dargestellt an den Nocken 14 des Blendrahmens 10 an. Das offene Ende 26 bildet die Injektionsöffnung 26 und schließt vorzugsweise bündig in der dargestellten Ausführungsform mit der Außenwand 15 ab, oder liegt sogar etwas unter den Ebene der Außenwand 15, insbesondere aber innerhalb von deren Wanddicke.

Im Inneren der Siebhülse 20 sind vier Längsstege 24 platziert, wodurch ein geführtes Eindrehen der Gewindestange 40 in die Siebhülse 20 mit formbarem Injektionskleber 30 gewährleistet ist. Zudem erhöhen diese die Eigensteifigkeit der Siebhülse 20. Figur 5 zeigt die Siebhülse mit montierter Gewindestange 40 in perspektivischer Ansicht

Die Figur 4c zeigt die Siebhülse 20 in der 2D-Seitenansicht und Figur 4d zeigt die Siebhülse 20 in der 2D-Draufansicht. In dieser Ausführungsform sind außen auf der Wandung der Siebhülse zwei Rastnasen 21 angeformt, insbesondere nahe der Injektionsöffnung. Die Rastnasen können vorzugsweise die Innenwandfläche der Außenwand hintergreifen. Die Rastnasen 21 wirken wie Widerhaken, die beim Klebeprozess die Siebhülse 20 im Blendrahmen fixieren, sodass die Siebhülse 20 nicht aus dem Blendrahmen 10 gezogen wird. Der Injektionskleber 30 wird in das offene Ende der Siebhülse 20, mittels Einbringen einer Einspritzdüse appliziert. Durch den vorzugsweise konischen Verlauf der Einspritzdüse, wirkt diese klemmend mit der Siebhülse 20 zusammen und beim anschließenden Ausbringen der Einspritzdüse behält die Siebhülse 20 dennoch ihre Position, da sie mit den Rastnasen 21 an Ort und Stelle gehalten wird. Ohne die Rastnasen 21 würde die Siebhülse 20 durch die klemmende Wirkung und insbesondere in Kombination mit der klebrigen Injektionsmasse 30, wieder herausgezogen.

Die Figur 4c' zeigt die Siebhülse in der 2D-Seitenansicht A-A gemäß der Seitenansicht nach Figur 4c. Aus wirtschaftlichen Gründen werden bevorzugt sogenannte Auf -/ Zuwerkzeuge verwendet, die an einer Trennebene 28 zusammengeführt werden und nach dem Spitzvorgang zum Entformen des Werkstücks auch dort voneinander getrennt werden.

Besonders die Figuren 4a und 4c zeigen die Anordnung der Austrittsöffnungen 22 in jeweils separierten Gruppen G1, G2, G3, G4 und G5, wobei zwischen den Austrittsöffnungen 22 der Gruppen G1-G5 jeweils ein Wandungsbereich 23 ohne Austrittsöffnungen angeordnet ist, der benachbarte Gruppen G1-G5 separiert.

Um ein rückstandsloses Entformen zu gewährleisten, ist das Werkzeug so zu konstruieren, dass insbesondere Hohlräume, wie zum Beispiel die Austrittsöffnungen 22, 23 in der Siebhülse 20, so gestaltet sind, dass die begrenzenden Wände 29 der Austrittsöffnungen in Entformungsrichtung verlaufen. Ziel der Entformung ist stets ein rückstandsloses und leichtes Entfernen der Spritzgussformen. Hinterschnitte oder andere Verwinkelungen benötigen kompliziertere, meist mehrteilige Spritzgusswerkzeuge mit Schiebern. Dies gilt es durch durchdachte Werkstückkonstruktionen zu vermeiden. In diesem Fall werden die Wände 29 der Austrittsöffnungen direkt in der Entformungsrichtung ausgerichtet.

Die Figur 4d' zeigt die Siebhülse 20 in der 2D-Draufansicht vom offenen Ende 26 aus mit montierter Gewindestange 40 gemäß Figur 5. Im Inneren der Siebhülse 20 sind vier Längsstege 24 platziert, wodurch ein geführtes Eindrehen der Gewindestange 40 in die Siebhülse 20 mit formbarer Injektionsmasse 30 gewährleistet ist. Zudem erhöhen diese die Eigensteifigkeit der Hülse.

Die Gewindestange 40 liegt an den vier Längsstegen 24 an und bildet zwischen den Längsstegen 24 einen definierten Spalt 25, der Raum für die Injektionsmasse 30 bietet. Der definierte Spalt 25 ist zwischen allen Längsstegen 24 gleich und bietet Raum für eine gleichmäßige Aufnahme von Injektionsmasse 30. Jeder Spalt 25 kann das gleiche Volumen an Injektionsmasse 30 aufnehmen. Dies ist von Bedeutung, denn somit werden die Gewindegänge in dem Injektionskleber 30 eingebettet. Nach der Aushärtung des Injektionsklebers 30 ist die Gewindestange 40 kraft- und formschlüssig mit dem Injektionskleber 30 verbunden und damit fest im Kunststoffhohlprofil 10.

Figur 6 zeigt eine weitere Ausführungsform der Siebhülse 21 mit Lasche 21a in perspektivischer Ansicht. Bei dieser Ausführungsform sind beidseits der Rastnase 21 jeweils axial erstreckte Ausnehmungen 21c zu erkennen, die vom offenen Ende 26 in die Siebhülse 20 reichen. Die Materialentnahme führt dazu, dass eine Lasche 21a gebildet wird, die eine, insbesondere radiale, Federwirkung entfaltet. Die Laschen 21 a sind spiegelbildlich, symmetrisch.

Die Längsstege 24 weisen an ihrer zum Innendurchmesser / radial nach innen weisenden Kante eine Aufdickung 21b auf, insbesondere in radialer Richtung,auf, vorzugsweise die ebenfalls spiegelbildlich / symmetrisch auch am gegenüberliegenden Längssteg 24 angeordnet ist.

Der freie Innendurchmesser im Aufdickungsbereich ist kleiner, als der Gewindestangendurchmesser. Dieses konstruktive Detail führt dazu, dass beim Einbringen der Gewindestange 40 die Lasche 21a aufgespreizt wird und die Rastnase 21 besser verrastet und eine stramme Verrastung erzielt wird, die wiederum ein etwaiges Herausziehen der Siebhülse 20, durch das Entnehmen der Injektionsdüse, verhindert.

Gleichzeitig kann die Injektionsdüse weiter in das Hohlprofil 10 eingebracht werden, sodass sichergestellt ist, dass der Injektionskleber 30 nicht schon in den Vorkammern 18 abgegeben werden kann. Durch ein Vorschieben der Siebhülse 20 werden die Austrittsöffnungen 22 sicher dort positioniert, wohin auch der Injektionskleber 30 gelangen soll, nämlich in die angrenzenden Hohlkammern 12c, 12d und 12e, siehe auch Figur 3b.

### Bezugszeichenliste

- 100: Befestigungssystem
- 10: Hohlprofil (Blendrahmen, Flügelrahmen, Pfosten)
- 11: Hauptkammer
- 12a - 12e: Vorkammer
- 13: Bohrung
- 15: Außenwand zur äußeren Umgebung
- 16: Außenwand zum Rauminneren
- 17: äußere Begrenzungsfläche
- 17a: Falzbereich
- 18: Vorkammern
- 19: Entwässerungskammer
- 19a: Entwässerungshohle
- 19b: Hohlkammer für die Entlüftung
- 20: Siebhülse
- 21: Rastnase
- 21a: Lasche
- 21b: Aufdickung
- 21c: Ausnehmung
- 22: Austrittsöffnungen
- G1-G5: Gruppen der Austrittsöffnungen
- 23: Wandungsbereich ohne Austrittsöffnungen
- 24: Längssteg
- 25: Spalt
- 26: Offenes Ende
- 27: Verschlossenes Ende oder altern. offenes Ende
- 28: Trennebene des Spritzgußwerkzeugs
- 29: Wand der Austrittsöffnungen
- 30: Injektionskleber
- 40: Verankerungselement, z.B. Gewindestange / Innengewindeanker

## Patentansprüche

1. System zur Befestigung eines Verankerungselements (40) in einem Hohlprofil (10) mit einer Siebhülse (20) für die Befestigung des Verankerungselementes (40) in dem Hohlprofil (10), wobei das System das Hohlprofil (10) und die Siebhülse (20) umfasst und wobei die Siebhülse (20) eine Längserstreckung entlang einer Mittelachse aufweist und an wenigstens einem der axialen Enden eine Injektionsöffnung (26) aufweist, wobei die Wandung der Siebhülse (20) mehrere, die Wandung vollständig durchdringende Austrittsöffnungen (22) aufweist, wobei
a. das Hohlprofil (10) durch ein Hohlprofil (10), vorzugsweise durch ein Kunststoffhohlprofil (10), eines Fensters oder einer Tür mit in einer Richtung zwischen den sich gegenüberliegenden Außenwänden (15, 16) hintereinander angeordneten Hohlkammern (11, 12, 18,19) gebildet ist, und
b. in der Wandung der Siebhülse (20) wenigstens zwei Gruppen (G1,...,G5) von Austrittsöffnungen (22) vorgesehen sind,
**dadurch gekennzeichnet, dass**
c. in der Wandung der Siebhülse (20) wenigstens ein axial erstreckter Wandungsbereich (23) ohne Austrittsöffnungen zwischen zwei Gruppen (G1,...,G5) ausgebildet ist,
d. wobei die Siebhülse (20) und das Hohlprofil (10) so aneinander angepasst sind, dass nach Einstecken der Siebhülse (20) in eine sich von einer Außenwandung (15, 16) in das Hohlprofil (10) erstreckten Bohrung (13) die Austrittsöffnungen (22) jeder Gruppe (G1,...,G5) in eine andere mit Injektionskleber (30) zu füllende Hohlkammer (12c, 12d, 12e) münden und der wenigstens eine axial erstreckte Wandungsbereich (23) ohne Austrittsöffnungen eine andere nicht mit Injektionskleber zu füllende Hohlkammer (11, 18) vollständig durchsetzt, wobei
e. eine nicht mit Injektionskleber (30) zu füllende Hohlkammer (11, 18) zumindest gebildet ist durch die Hauptkammer (11), welche die größte aller Hohlkammern ist, vorzugsweise, in die ein Stahlverstärkungsprofil aufnehmbar ist.

2. System nach Anspruch 1, **dadurch gekennzeichnet, dass** die axiale Länge wenigstens eines Bereiches (23) ohne Austrittsöffnungen größer ist als der Abstand, vorzugsweise der in der Richtung zwischen den Außenwänden (15, 16) gemessene Abstand, der die Hauptkammer (11) umgrenzenden Innenwände des Hohlprofils (10), insbesondere die axiale Länge größer ist als 20%, weiter bevorzugt größer ist als 30%, weiter bevorzugt größer ist als 40% der axialen Gesamtlänge der Siebhülse (20).

3. System nach einem der vorherigen Ansprüche, **dadurch gekennzeichnet, dass** zumindest eine der Gruppen (G1,...,G5), vorzugsweise jede Gruppe (G1,...,G5) genau eine in Umfangsrichtung um die Mittelachse herum ausgebildete ringförmige Anordnung von Austrittsöffnungen (22) aufweist, insbesondere die Gruppe (G1,...,G5) / jede Gruppe (G1,...,G5) eine axiale Länge aufweist, die der axialen Erstreckung der in axialer Richtung größten Austrittsöffnung (22) dieser Gruppe (G1,...,G5) entspricht.

4. System nach einem der vorherigen Ansprüche, **dadurch gekennzeichnet, dass** die axiale Länge wenigstens eines Bereiches (23) ohne Austrittsöffnungen zwischen zwei benachbarten Gruppen (G1,...,G5) größer ist als das n-fache der axialen Länge von jeder der benachbarten Gruppen, wobei n>=2 ist, vorzugsweise n>=3 ist, weiter bevorzugt n>=4 ist, weiter bevorzugt n>=5 ist.

5. System nach einem der vorherigen Ansprüche, **dadurch gekennzeichnet, dass** die axiale Länge wenigstens eines Bereiches (23) ohne Austrittsöffnungen zwischen zwei benachbarten Gruppen (G1,...,G5) kleiner ist als der Abstand oder gleich ist wie der Abstand von zwei Innenwänden im Hohlprofil (10), welche zwei benachbarte Hohlkammern (12) umgeben, insbesondere nach außen umgrenzen.

6. System nach einem der vorherigen Ansprüche, **dadurch gekennzeichnet, dass** in einem axialen Anfangsbereich zwischen der Injektionsöffnung (26) und der in axialer Richtung folgenden ersten Gruppe (G1) von Austrittsöffnungen (22) ein Bereich (23) ohne Austrittsöffnungen ausgebildet ist, und diesem Bereich eine nicht mit Injektionskleber (30) zu füllende Hohlkammer (11, 18) zugeordnet ist, die durch die unmittelbar an die Außenwand (15, 16) innen angrenzende Vorkammer (18) gebildet ist, welche, insbesondere betrachtet im Querschnitt senkrecht zur Längserstreckungsrichtung des Hohlprofils (10), eine Fluidverbindung zur äußeren Umgebung des Hohlprofils (10) aufweist.

7. System nach einem der vorherigen Ansprüche, **dadurch gekennzeichnet, dass** die Siebhülse (20) am axialen Ende mit der Injektionsöffnung (26) ohne Kragen ausgebildet ist.

8. System nach einem der vorherigen Ansprüche, **dadurch gekennzeichnet, dass** die Siebhülse (20) am axialen Endbereich, welcher die Injektionsöffnung (26) umfasst, wenigstens eine, vorzugsweise wenigstens zwei von der Wandung nach radial außen vorspringende Rastnasen (21) aufweist, insbesondere mit denen ein Bohrungsrand in der Begrenzungsfläche (17), vorzugsweise in der Außenwand (15, 16), eines Hohlprofils (10) hintergreifbar ist.

9. System nach Anspruch 8, **dadurch gekennzeichnet, dass** jede Rastnase (21) auf einer in radialer Richtung federnd nachgiebigen Lasche (21a) angeordnet ist, die von zwei in axialer Richtung in der Wandung verlaufenden zueinander parallelen Schlitzen (21c) umgrenzt ist.

10. System nach einem der vorherigen Ansprüche, **dadurch gekennzeichnet, dass** die Siebhülse (20) wenigstens drei, vorzugsweise wenigstens vier in axialer Richtung auf der Innenseite der Wandung verlaufende Stege (24) aufweist, zwischen denen in Inneren der Siebhülse (20) ein Verankerungselement (40) aufnehmbar ist, insbesondere das Verankerungselement (40) in Inneren der Siebhülse (20) zentrierbar ist.

11. System nach Anspruch 9 und 10, **dadurch gekennzeichnet, dass** jede Lasche (21a) einen axialen Anfangsbereich des Steges (24) umfasst, insbesondere wobei der Steg (24) am freien Ende der Lasche (21a) eine Überhöhung/Aufdickung (21b) aufweist.

12. System nach einem der vorherigen Ansprüche, **dadurch gekennzeichnet, dass** die Siebhülse (20) als Spritzgußteil ausgebildet ist.

13. System nach einem der vorherigen Ansprüche, **dadurch gekennzeichnet, dass** jede Austrittsöffnung (22), vorzugsweise jede Öffnung in der Wandung eine Erstreckung, vorzugsweise zumindest eine mittlere Erstreckung aufweist, die senkrecht liegt zu derselben, die Mittelachse umfassenden Ebene, vorzugsweise wobei jede Öffnung sich nach außen im Querschnitt erweitert.

14. System nach einem der vorherigen Ansprüche, **dadurch gekennzeichnet, dass** die Siebhülse (20) eine solche axiale Länge aufweist, dass diese nach Einsetzen in eine Bohrung (13) im Hohlprofil (10) mit einem axial offenen Ende innen an die Außenwand (15) oder eine Innenwand des Hohlprofils (10) kontaktierend anliegt, insbesondere wobei die Stirnfläche der Injektionsöffnung (26) bündig mit der gebohrten Begrenzungsfläche (17), insbesondere der Außenwand (16) oder unter dieser liegend ist.

15. Verfahren zur Anbringung eines Verankerungselementes in ein Hohlprofil mittels eines Systems nach einem der vorherigen Ansprüche, **dadurch gekennzeichnet, dass**
a. durch eine der sich gegenüberliegenden Außenwände (15, 16) des Hohlprofils (10) des Systems in die Tiefe des Hohlprofils (10), insbesondere in der Richtung der Beabstandung der sich gegenüberliegenden Außenwände (15, 16), eine Bohrung (13) erstellt wird, welche wenigstens eine Hohlkammer (12) beidseits der Hauptkammer (11) durchsetzt, bevorzugt die bis in die letzte Hohlkammer (12) vor der gegenüberliegenden Außenwand (15) reicht,
b. die Siebhülse (20) des Systems in die Bohrung (13) eingesetzt wird,
c. in die Siebhülse (20) ein härtbarer Injektionskleber (30) injiziert wird,
d. das Verankerungselement (40) in die Siebhülse (20) eingeschoben wird, insbesondere unter Verpressung des Injektionsklebers (30) durch die Austrittsöffnungen (22),
e. der Injektionskleber (30) durch die Austrittsöffnungen (22) der wenigstens einen Gruppe (G1,...,G5) von Austrittsöffnungen (22) nur in die mit Injektionskleber (30) zu füllende, der jeweiligen Gruppe zugeordnete Hohlkammer (12c, 12d, 12e) verpresst wird und nicht in die Hauptkammer (11) verpresst wird, bevorzugt auch nicht in solche Hohlkammern (18) verspresst wird, die eine Fluidverbindung zur äußeren Umgebung des Hohlprofils (10) aufweisen.

## Claims

1. System for fastening an anchoring element (40) in a hollow profile (10), with a perforated sleeve (20) for fastening the anchoring element (40) in the hollow profile (10), wherein the system comprises the hollow profile (10) and the perforated sleeve (20), and wherein the perforated sleeve (20) has a longitudinal extent along a central axis and has on at least one of the axial ends an injection opening (26), wherein the wall of the perforated sleeve (20) has a plurality of outlet openings (22) which completely penetrate the wall, wherein
a. the hollow profile (10) is formed by a hollow profile (10), preferably by a hollow plastic profile (10), of a window or a door with cavities (11, 12, 18, 19) arranged successively in a direction between the opposing outer walls (15, 16), and
b. at least two groups (G1,...,G5) of outlet openings (22) are provided in the wall of the perforated sleeve (20), **characterized in that**
c. at least one axially extending wall region (23) is formed in the wall of the perforated sleeve (20) without outlet openings between two groups (G1,...,G5),
d. wherein the perforated sleeve (20) and the hollow profile (10) are adapted to each other in such a way that after inserting the perforated sleeve (20) into a bore (13) extending from an outer wall (15, 16) into the hollow profile (10), the outlet openings (22) of each group (G1,...,G5) open into another cavity (12c, 12d, 12e) to be filled with injection adhesive (30) and the at least one axially extending wall region (23) without outlet openings completely penetrates another cavity (11, 18) not to be filled with injection adhesive, wherein
e. a cavity (11, 18) not to be filled with injection adhesive (30) is at least formed by the main chamber (11), which is the largest of all cavities, preferably in which a steel reinforcement profile is able to be received.

2. System according to Claim 1, **characterized in that** the axial length of at least one region (23) without outlet openings is greater than the spacing, preferably the spacing measured in the direction between the outer walls (15, 16), of the inner walls of the hollow profile (10) bordering the main chamber (11), in particular the axial length being greater than 20%, more preferably greater than 30%, more preferably greater than 40% of the overall axial length of the perforated sleeve (20).

3. System according to one of the preceding claims, **characterized in that** at least one of the groups (G1,...,G5), preferably each group (G1,...,G5), has exactly one annular arrangement of outlet openings (22) formed in the circumferential direction about the central axis, in particular the group (G1,...,G5) / each group (G1,...,G5) having an axial length which corresponds to the axial extent of the largest outlet opening (22) of this group (G1,..,G5) in the axial direction.

4. System according to one of the preceding claims, **characterized in that** the axial length of at least one region (23) without outlet openings between two adjacent groups (G1,...,G5) is greater than n-times the axial length of each of the adjacent groups, where n>=2, preferably n>=3, furthermore preferably n>=4, furthermore preferably n>=5.

5. System according to one of the preceding claims, **characterized in that** the axial length of at least one region (23) without outlet openings between two adjacent groups (G1,...,G5) is smaller than the spacing or equal to the spacing of two inner walls in the hollow profile (10), which surround two adjacent cavities (12), in particular border the latter towards the outside.

6. System according to one of the preceding claims, **characterized in that** formed in an axial initial region between the injection opening (26) and the first group (G1) of outlet openings (22) following in the axial direction is a region (23) without outlet openings, and this region is assigned a cavity (11, 18) not to be filled with injection adhesive (30), that is formed by the antechamber (18) which is directly adjacent to the outer wall (15, 16) on the inside and which, especially when viewed in cross section perpendicular to the longitudinal direction of extent of the hollow profile (10), has a fluidic connection to the outer environment of the hollow profile (10).

7. System according to one of the preceding claims, **characterized in that** the perforated sleeve (20) at the axial end is formed with the injection opening (26) without a collar.

8. System according to one of the preceding claims, **characterized in that** the perforated sleeve (20), on the axial end region which comprises the injection opening (26), has at least one, preferably at least two projecting latching cams (21) which project radially outwards from the wall, in particular by way of which a bore periphery in the boundary surface (17), preferably in the outer wall (15, 16), of a hollow profile (10), is able to be engaged in from behind.

9. System according to Claim 8, **characterized in that** each locking cam (21) is arranged on a tab (21a) which is resilient in the radial direction and which is bordered by two slots (21c) running in parallel in the axial direction in the wall.

10. System according to one of the preceding claims, **characterized in that** the perforated sleeve (20) has at least three, preferably at least four, webs (24) extending in the axial direction on the inside of the wall, between which an anchoring element (40) is able to be received in the interior of the perforated sleeve (20), in particular the anchoring element (40) being able to be centred in the interior of the perforated sleeve (20).

11. System according to Claims 9 and 10, **characterized in that** each tab (21a) comprises an axial initial region of the web (24), in particular wherein the web (24) has a superelevation/thickening (21b) on the free end of the tab (21a).

12. System according to one of the preceding claims, **characterized in that** the perforated sleeve (20) is formed as an injection-moulded part.

13. System according to one of the preceding claims, **characterized in that** each outlet opening (22), preferably each opening in the wall, has an extent, preferably at least a central extent, which lies perpendicularly to the same plane comprising the central axis, preferably wherein each opening widens outwardly in the cross section.

14. System according to one of the preceding claims, **characterized in that** the perforated sleeve (20) has such an axial length that, after insertion into a bore (13) in the hollow profile (10) with an axially open end, it is in contact with the inside of the outer wall (15) or an inner wall of the hollow profile (10), in particular wherein the end face of the injection opening (26) is flush with the drilled boundary surface (17), in particular the outer wall (16) or lies below the latter.

15. Method for attaching an anchoring element in a hollow profile by means of a system according to one of the preceding claims, **characterized in that**
a**.** a bore (13) which penetrates at least one cavity (12) on both sides of the main chamber (11), preferably which reaches into the last cavity (12) before the opposite outer wall (15), is established through one of the opposing outer walls (15, 16) of the hollow profile (10) of the system in the depth of the hollow profile (10), in particular in the direction of the spacing of the opposing outer walls (15, 16),
b**.** the perforated sleeve (20) of the system is inserted into the bore (13),
c**.** a curable injection adhesive (30) is injected into the perforated sleeve (20),
d. the anchoring element (40) is pushed into the perforated sleeve (20), in particular by pressing the injection adhesive (30) through the outlet openings (22),
e. the injection adhesive (30) is pressed through the outlet openings (22) of at least one group (G1,...,G5) of outlet openings (22) only into the cavity (12c, 12d, 12e) which to be filled with injection adhesive (30) and is assigned to the respective group, and is not pressed into the main chamber (11), preferably also not pressed into such cavities (18) which have a fluidic connection to the outer environment of the hollow profile (10).

## Revendications

1. Système de fixation d'un élément d'ancrage (40) dans un profilé creux (10) avec un manchon perforé (20) pour la fixation de l'élément d'ancrage (40) dans le profilé creux (10), le système comprenant le profilé creux (10) et le manchon perforé (20) et le manchon perforé (20) présentant une extension longitudinale le long d'un axe central et comportant une ouverture d'injection (26) sur au moins une des extrémités axiales, la paroi du manchon perforé (20) comportant plusieurs ouvertures de sortie (22) traversant totalement la paroi,
a. le profilé creux (10) étant formé par un profilé creux (10), de préférence par un profilé creux en matière plastique (10), une fenêtre ou une porte avec des chambres creuses (11, 12, 18, 19) disposées les unes derrière les autres dans une direction entre les parois extérieures (15, 16) se faisant face, et
b. au moins deux groupes (G1, ..., G5) d'ouvertures de sortie (22) étant prévus dans la paroi du manchon perforé (20), **caractérisé en ce que**
c. au moins une zone de cloison (23) s'étendant axialement sans ouverture de sortie est réalisée entre deux groupes (G1, ..., G5) dans la paroi du manchon perforé (20),
d. le manchon perforé (20) et le profilé creux (10) étant adaptés l'un à l'autre de telle sorte que les ouvertures de sortie (22) de chaque groupe (G1, ..., G5) débouchent dans une autre chambre creuse (12c, 12d, 12e) à remplir avec de la colle d'injection (30) après l'enfichage du manchon perforé (20) dans un alésage (13) s'étendant depuis une cloison extérieure (15, 16) dans le profilé creux (10) et l'au moins une zone de cloison (23) s'étendant axialement sans ouvertures de sortie traversant totalement une autre chambre creuse (11, 18) à remplir avec de la colle d'injection,
e. une chambre creuse (11, 18) à remplir avec de la colle d'injection (30) étant formée au moins par la chambre principale (11), laquelle est la plus grande de toutes les chambres creuses, de préférence dans laquelle un profilé de renforcement en acier peut être reçu.

2. Système selon la revendication 1, **caractérisé en ce que** la longueur axiale d'au moins une zone (23) sans ouvertures de sortie est plus grande que la distance, de préférence que la distance mesurée dans la direction entre les parois extérieures (15, 16), des parois intérieures du profilé creux (10) délimitant la chambre principale (11), en particulier la longueur axiale est supérieure à 20 %, par ailleurs de manière préférée à 30 %, par ailleurs de manière préférée supérieure à 40 % de la longueur totale axiale du manchon perforé (20).

3. Système selon l'une des revendications précédentes, **caractérisé en ce qu'**au moins un des groupes (G1, ..., G5), de préférence chaque groupe (G1, ..., G5) comporte précisément un agencement d'ouvertures de sortie (22) annulaire réalisé tout autour de l'axe central dans la direction périphérique, en particulier le groupe (G1, ..., G5)/chaque groupe (G1, ..., G5) présente une longueur axiale, qui correspond à l'extension axiale de l'ouverture de sortie (22) dudit groupe (G1, ..., G5) la plus grande dans la direction axiale.

4. Système selon l'une des revendications précédentes, **caractérisé en ce que** la longueur axiale d'au moins une zone (23) sans ouvertures de sortie entre deux groupes (G1, ..., G5) adjacents est supérieure à n fois la longueur axiale de chacun des groupes adjacents, n >= 2, de préférence n >= 3, par ailleurs de manière préférée n >= 4, par ailleurs de manière préférée n >= 5.

5. Système selon l'une des revendications précédentes, **caractérisé en ce que** la longueur axiale d'au moins une zone (23) sans ouvertures de sortie entre deux groupes (G1, ..., G5) adjacents est inférieure à la distance ou est égale à la distance entre deux parois intérieures dans le profilé creux (10), lesquelles entourent deux chambres creuses (12) adjacentes, en particulier les délimitent vers l'extérieur.

6. Système selon l'une des revendications précédentes, **caractérisé en ce qu'**une zone (23) sans ouvertures de sortie est réalisée dans une zone de départ axiale entre l'ouverture d'injection (26) et le premier groupe (G1) d'ouvertures de sortie (22) suivant dans la direction axiale et une chambre creuse (11, 18) qui n'est pas à remplir avec de la colle d'injection (30) est associée à ladite zone, laquelle est formée par la préchambre (18) jouxtant directement côté intérieur la paroi extérieure (15, 16), laquelle présente une communication fluidique avec l'environnement extérieur du profilé creux (10), vue en particulier dans la section transversale perpendiculairement à la direction d'extension longitudinale du profilé creux (10).

7. Système selon l'une des revendications précédentes, **caractérisé en ce que** le manchon perforé (20) est réalisé sur l'extrémité axiale avec l'ouverture d'injection (26) sans rebord.

8. Système selon l'une des revendications précédentes, **caractérisé en ce que** le manchon perforé (20) comporte, sur la zone d'extrémité axiale qui comprend l'ouverture d'injection (26), au moins un, de préférence au moins deux d'ergots d'enclenchement (21) faisant saillie vers l'extérieur radialement de la cloison, en particulier avec lesquels un bord d'alésage peuvent venir en prise par l'arrière avec la surface de délimitation (17), de préférence dans la paroi extérieure (15, 16) d'un profilé creux (10).

9. Système selon la revendication 8, **caractérisé en ce que** chaque ergot d'enclenchement (21) est disposé sur une languette (21a) souple élastiquement dans la direction radiale, qui est délimitée par deux entailles (21c) parallèles l'une par rapport à l'autre s'étendant dans une direction axiale dans la cloison.

10. Système selon l'une des revendications précédentes, **caractérisé en ce que** le manchon perforé (20) comporte au moins trois, de préférence au moins quatre entretoises (24) s'étendant dans la direction axiale sur le côté intérieur de la cloison, entre lesquelles un élément d'ancrage (40) peut être reçu à l'intérieur du manchon perforé (20), en particulier l'élément d'ancrage (40) peut être centré à l'intérieur du manchon perforé (20).

11. Système selon la revendication 9 et 10, **caractérisé en ce que** chaque languette (21a) comprend une zone de départ axiale de l'entretoise (24), en particulier l'entretoise (24) comportant sur l'extrémité libre de la languette (21a) une surélévation/surépaisseur (21b).

12. Système selon l'une des revendications précédentes, **caractérisé en ce que** le manchon perforé (20) est réalisé comme une pièce moulée par injection.

13. Système selon l'une des revendications précédentes, **caractérisé en ce que** chaque ouverture de sortie (22), de préférence chaque ouverture dans la cloison, présente une extension, de préférence au moins une extension moyenne, qui est perpendiculaire au même plan comprenant l'axe central, chaque ouverture s'élargissant de préférence vers l'extérieur dans la section transversale.

14. Système selon l'une des revendications précédentes, **caractérisé en ce que** le manchon perforé (20) présente une longueur axiale telle que celle-ci repose avec contact après insertion dans un alésage (13) dans le profilé creux (10) par une extrémité axialement ouverte à l'intérieur sur la paroi extérieure (15) ou une paroi intérieure du profilé creux (10), en particulier la surface frontale de l'ouverture d'injection (26) étant située en affleurement avec la surface de délimitation (17) percée, en particulier la paroi extérieure (16) ou sous celle-ci.

15. Procédé d'installation d'un élément d'ancrage dans un profilé creux au moyen d'un système selon l'une des revendications précédentes, **caractérisé en ce que**
a. un alésage (13) est créé par une des parois extérieures (15, 16) se faisant face du profilé creux (10) du système dans la profondeur du profilé creux (10), en particulier dans la direction de l'espacement des parois extérieures (15, 16) se faisant face, lequel traverse au moins une chambre creuse (12) de part et d'autre de la chambre principale (11), de manière préférée qui va jusque dans la dernière chambre creuse (12) devant la paroi extérieure (15) faisant face,
b. le manchon perforé (20) du système est inséré dans l'alésage (13),
c. une colle d'injection (30) durcissable est injectée dans le manchon perforé (20),
d. l'élément d'ancrage (40) est enfilé dans le manchon perforé (20), en particulier par compression de la colle d'injection (30) à travers les ouvertures de sortie (22),
e. la colle d'injection (30) est compressée à travers les ouvertures de sortie (22) de l'au moins un groupe (G1, ..., G5) d'ouvertures de sortie (22) seulement dans la chambre creuse (12c, 12d, 12e) à remplir de la colle d'injection (30), associée au groupe respectif et n'est pas compressée dans la chambre principale (11), de manière préférée n'est pas compressée non plus dans des chambres creuses (18) du type, qui présentent une communication fluidique avec l'environnement extérieur du profilé creux (10).
